# EUROPÄISCHE PATENTSCHRIFT

(11) **EP 0 969 107 B1**
(45) Veröffentlichungstag und Bekanntmachung des Hinweises auf die Patenterteilung: **11.12.2002**
(21) Anmeldenummer: 99113824.9
(22) Anmeldetag: 20.10.1993
(51) Int. Cl.: C21B 13/14

(54) **Verfahren zur Herstellung von flüssigem Roheisen oder flüssigen Stahlvorprodukten und heiss brikettiertem Eisen**
Process for producing molten pig iron or molten steel pre-products and hot briquetted iron
Procédé pour produire de la fonte brute liquide ou des produits d'acier préaffinés liquides et du fer chaud briquetté

(30) Priorität: 22.10.1992 AT 209692
(43) Veröffentlichungstag der Anmeldung: 05.01.2000
(62) Teilanmeldung aus: 93890205.3
(73) Patentinhaber: Voest Alpine Industrieanlagenbau Gmbh, 4020 Linz (AT); POHANG IRON & STEEL CO., LTD., Pohang City, Kyong Sang Book-Do 790-300 (KR); Research Institute of Industrial Science and Technology, Incorporated Foundation, Pohang City (KR)
(72) Erfinder: Kepplinger, Werner, Dipl.-Ing. Dr., 4060 Leonding (AT); Matzawrakos, Panajiotis, Dipl.-Ing., 4020 Linz (AT); Schenk, Johannes, Dipl.-Ing. Dr., 4040 Linz (AT); Siuka, Dieter, Dipl.-Ing., 4501 Neuhofen (AT); Böhm, Christian, Dipl.-Ing., 40223 Düsseldorf (DE)
(74) Vertreter: Kopecky, Helmut, Dipl.-Ing.

(56) Entgegenhaltungen:
- EP-A- 0 012 363
- EP-A- 0 364 865
- EP-A- 0 487 856
- GB-A- 924 659
- PATENT ABSTRACTS OF JAPAN vol. 004, no. 166 (C-031), 18. November 1980 (1980-11-18) & JP 55 107710 A (KAWASAKI HEAVY IND LTD), 19. August 1980 (1980-08-19)
- PATENT ABSTRACTS OF JAPAN vol. 013, no. 472 (C-647), 25. Oktober 1989 (1989-10-25) & JP 01 184211 A (NIPPON STEEL CORP), 21. Juli 1989 (1989-07-21)

## Beschreibung

Die Erfindung betrifft ein Verfahren zur Herstellung von flüssigem Roheisen oder flüssigen Stahlvorprodukten aus von Eisenerzen und Zuschlägen gebildeten, zumindest teilweise einen Feinanteil aufweisenden Einsatzstoffen, wobei die Einsatzstoffe in einer Vorwärmzone einer Vorwärmung im Wirbelschichtverfahren unterzogen werden, in mindestens einer Reduktionszone im Wirbelschichtverfahren zu Eisenschwamm direkt und weitgehend fertig reduziert werden, der Eisenschwamm in eine Einschmelzvergasungszone chargiert, unter Zuführ von Kohlenstoffträgern und sauerstoffhältigem Gas erschmolzen und ein CO- und H₂-hältiges Reduktionsgas erzeugt wird, welches in die Reduktionszone eingeleitet, dort umgesetzt, als Exportgas abgezogen und einem Verbraucher zugeführt wird.

Ein Verfahren dieser Art ist beispielsweise aus der AT-B 390 622 bekannt. Gemäß der AT-B 390 622 werden Einsatzstoffe mit stark unterschiedlichen Korngrößen verarbeitet, wobei die Einsatzstoffe vorreduziert werden und durch Windsichten in Fraktionen mit unterschiedlichen Korngrößen getrennt werden, die dann getrennt fertigreduziert werden. Dieses bekannte einstufige Verfahren bietet jedoch nur eine geringe Wärmeausnützung des Reduktionsgases und bedingt aus diesem Grund einen erhöhten Reduktionsgasbedarf. Zudem ist keine optimale Ausnutzung der im Reduktionsgas chemisch gebundenen Energie gegeben.

Die Erfindung stellt sich die Aufgabe, ein Verfahren der eingangs beschriebenen Art sowie eine Anlage zur Durchführung des Verfahrens zu schaffen, welche den Einsatz von zumindest einen Feinanteil aufweisenden Eisenerzen und Zuschlägen in wirtschaftlicher Weise unter Verwendung von unbehandelter Kohle als Kohlenstoffträger ermöglicht, wobei die im gebrauchten Reduktionsgas noch enthaltene chemisch gebundene Energie (CO, H₂-Gehalt) genutzt werden kann. Insbesondere soll das beim Direktreduktionsprozeß anfallende Überschußgas effizient, d.h. unter Ausnutzung seiner noch enthaltenen Reduktanten eingesetzt werden.

Diese Aufgabe wird erfindungsgemäß für ein eingangs beschriebenes Verfahren dadurch gelöst, daß das aus der Vorwärmzone austretende Exportgas gegebenenfalls nach Zumischung eines Teiles des aus der Reduktionszone austretenden Reduktionsgases nach einer CO₂-Reinigung zur Erzeugung von heiß brikettiertem Eisen herangezogen wird, wobei Feinerz in einer Vorwärmzone einer Vorwärmung unterzogen, anschließend in mindestens einer Reduktionszone einer weitgehenden Fertigreduktion unterzogen und weiters einer Verdichter- und Brikettiereinrichtung zugeführt wird, und das Exportgas nach einer Aufheizung in die mindestens eine Reduktionszone unter Bildung eines Wirbelbettes geleitet sowie von dieser nach Durchströmen desselben abgezogen und der Vorwärmzone unter Teilverbrennung zwecks Temperaturerhöhung zur Bildung eines Wirbelbettes zugeführt wird. Vorzugsweise werden vorwiegend hämatitische und/oder magnetitische Feinerze und/oder Erzstäube verarbeitet.

Eine Anlage zur Durchführung des Verfahrens mit mindestens einem Wirbelschicht-Reduktionsreaktor, in den eine Förderleitung für Eisenerz und Zuschläge enthaltende Einsatzstoffe, eine Gasleitung für ein Reduktionsgas sowie eine Förderleitung für das in ihm gebildete Reduktionsprodukt und eine Gasleitung für das Topgas münden, und mit einem Einschmelzvergaser, in den die das Reduktionsprodukt aus dem Reduktionsreaktor führende Förderleitung mündet und der Zuleitungen für sauerstoffhältige Gase und Kohlenstoffträger sowie Abstiche für Roheisen bzw. Stahlvormaterial und Schlacke aufweist, wobei die in den Reduktionsreaktor mündende Gasleitung für im Einschmelzvergaser gebildetes Reduktionsgas vom Einschmelzvergaser ausgeht und dem Wirbelschicht-Reduktionsreaktor ein Wirbelschicht-Vorwärmreaktor in Fließrichtung der Einsatzstoffe vorgeordnet ist, in den die Gasleitung des Reduktionsreaktors einmündet, und wobei verbrauchtes bzw. teilverbrauchtes Reduktionsgas als Exportgas über eine Gasableitung einem Verbraucher zuleitbar ist, ist dadurch gekennzeichnet, daß die Gasleitung für das Exportgas zur Erzeugung von heißbrikettiertem Eisen nach Zwischenschaltung eines CO₂-Wäschers und einer Aufheizeinrichtung in mindestens einen weiteren Reduktionsreaktor mündet, von dem eine Gasleitung in einen Wirbelschicht-Vorwärmreaktor geführt ist, wobei in den Wirbelschicht-Vorwärmreaktor eine Feinerz-Chargierleitung mündet und von dem Wirbelschicht-Vorwärmreaktor eine das vorgewärmte Feinerz zum Reduktionsreaktor führende Förderleitung ausgeht, und daß dem Reduktionsreaktor in Richtung des Feinerzflusses eine Verdichter- und Brikettiereinrichtung nachgeordnet ist.

Eine bevorzugte Ausführungsform ist dadurch gekennzeichnet, daß der Wirbelschicht-Reduktionsreaktor einen unteren Teil mit geringerem Durchmesser und einen oberen, an den unteren Teil anschließenden Teil mit größerem Durchmesser aufweist, wobei der Übergang vom unteren in den oberen Teil konisch ausgebildet ist und in das konische Übergangsstück die zweite Zweigleitung für das Reduktionsgas einmündet.

Zweckmäßig ist der Wirbelschicht-Reduktionsreaktor in Höhe der Wirbelschicht mit einer Feinteilaustragseinrichtung versehen, von der eine Förderleitung zu einer Pneumatik-Fördereinrichtung führt, die zur Brikettiereinrichtung führt.

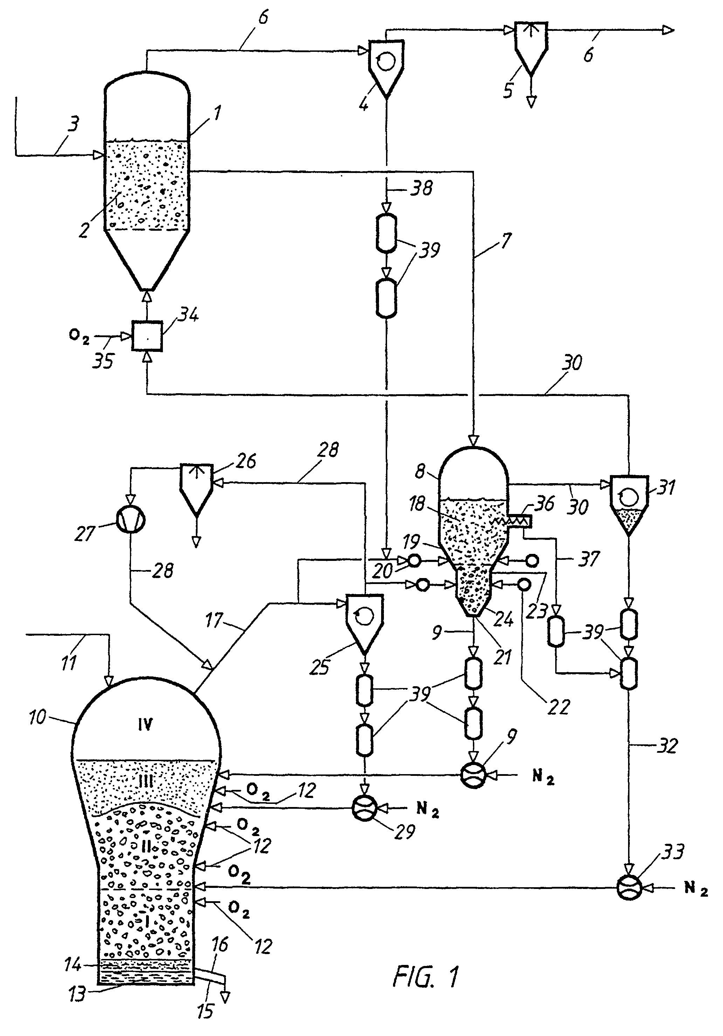

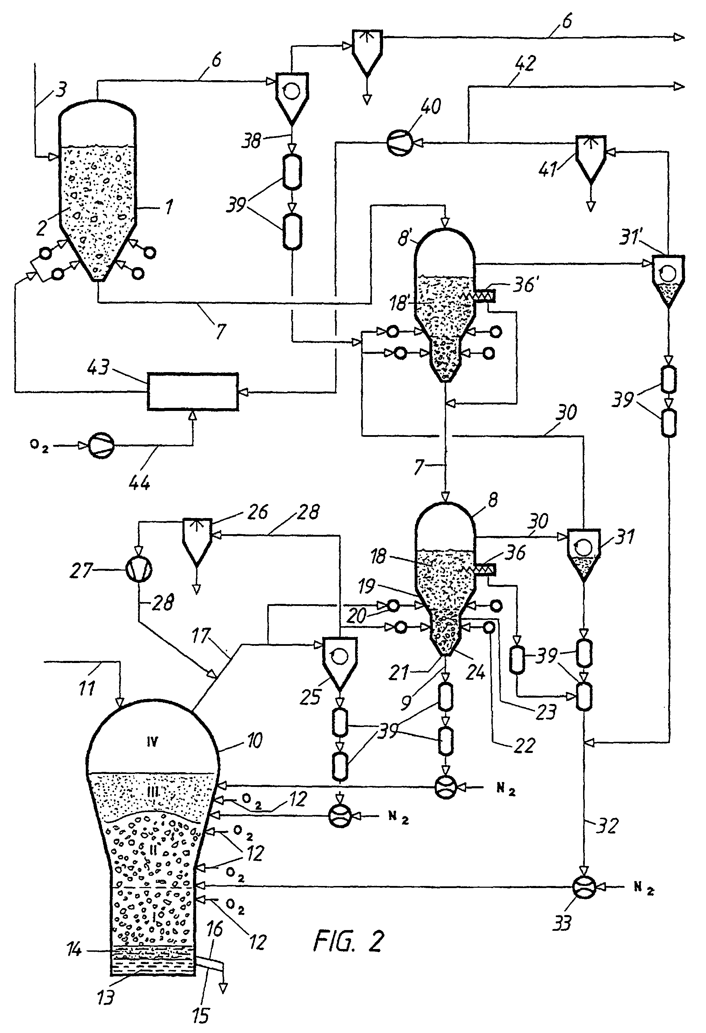

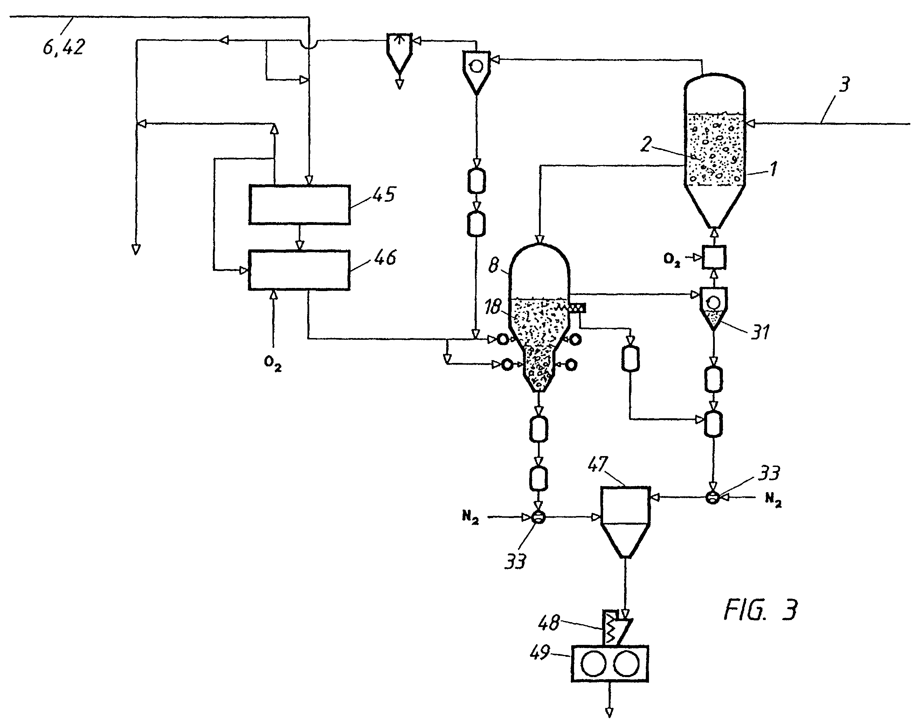

Die Erfindung ist nachstehend anhand dreier in der Zeichnung schematisch dargestellter Ausführungsbeispiele näher erläutert, wobei die Fig. 1 und 2 jeweils eine beispielhafte Ausführungsform einer Anlage gemäß dem Oberbegriff des Anspruches 1 in schematischer Darstellung zeigen und Fig. 3 eine Anlage gemäß dem kennzeichnenden Teil des Anspruches 1 veranschaulicht, wobei letztere erfindungsgemäß mit einer der lediglich ein Beispiel darstellenden Anlagen nach Fig. 1 oder 2 zu kombinieren ist.

Mit 1 ist ein Vorwärmreaktor, der als Wirbelschichtvorwärmreaktor ausgebildet ist, bezeichnet, in den Eisenerz und Zuschläge enthaltende Einsatzstoffe über eine seitlich in Höhe der Wirbelbettzone 2 (Vorwärmone) einmündende Chargierleitung 3 chargierbar sind. Am oberen Ende des schachtförmig ausgebildeten Wirbelschicht-Vorwärmreaktors 1 werden die in ihm gebildeten und ihn durchströmenden Gase über eine mit einem Gasreinigungszyklon 4 und einem Gaswäscher 5, wie einem Venturi-Wäscher, ausgestattete Gasableitung 6 abgezogen. Diese Gase stehen als hochwertiges Exportgas mit einem Heizwert von ca. 8000 kJ/Nm³ für verschiedene Zwecke, z.B. Strom- mit oder ohne Sauerstoff-Erzeugung, zur Verfügung.

Die in dem Wirbelschicht-Vorwärmreaktor 1 vorgewärmten Einsatzstoffe gelangen über eine Förderleitung 7 zur Gänze in einen ebenfalls als Wirbelschichtreaktor ausgebildeten Reduktionsreaktor 8 und werden in diesem größtenteils fertigreduziert.

Über eine Pneumatik-Eisenschwamm-Förderleitung 9 (mit N₂-Injektor) - hier könnte auch eine andere Zwangsfördereinrichtung vorgesehen sein - gelangt der im Wirbelschicht-Reduktionsreaktor 8 gebildete Eisenschwamm in einen Einschmelzvergaser 10, u.zw. wird er in Höhe eines im Einschmelzvergaser vorgesehenen Fließbettes III, II und/oder in Höhe des darunter befindlichen Festbettes I in diesen eingeleitet. Der Einschmelzvergaser weist mindestens eine Zuführung 11 für Kohle und Zuschläge sowie in mehreren Höhen angeordnete Düsenzuführungen 12 für sauerstoffhältige Gase auf.

In dem Einschmelzvergaser 10 sammelt sich unterhalb der Einschmelzvergasungszone, die von einem Festbett I, dem darüber liegenden Grobkoksfließbett II, dem über diesem liegenden Feinkoksfließbett III und dem darüber liegenden Beruhigungsraum IV gebildet ist, schmelzflüssiges Roheisen 13 und schmelzflüssige Schlacke 14, die über je einen Abstich 15, 16 getrennt abgestochen werden. In dem Einschmelzvergaser 10 wird aus den Kohlenstoffträgern und dem sauerstoffhältigen Gas ein Reduktionsgas erzeugt, welches sich im Beruhigungsraum IV oberhalb des Fließbettes III sammelt und über eine Gasleitung 17 dem Wirbelschicht-Reduktionsreaktor 8 zugeführt wird, u.zw. über eine zwecks Ausbildung einer Wirbelschicht 18 bzw. eines Wirbelbettes 18 (Reduktionszone) vorgesehene kegelstumpfförmige, einen Gasverteilungsboden 19 bildende Verengung des im wesentlichen schachtförmigen Wirbelschicht-Reduktionsreaktors 8, über deren Umfang das Reduktionsgas mittels einer Ringleitung 20 zugeführt wird.

Die großen Feststoffteilchen, die in der Wirbelschicht nicht in Schwebe gehalten werden können, sinken durch Schwerkrafteinwirkung mittig ab und werden über einen zentralen Feststoffaustrag 21 abgezogen. Dieser zentrale Feststoffaustrag 21 ist so gestaltet, daß über eine radiale Gasaufgabe 22 in den unterhalb des kegelstumpfförmigen Gasverteilungsbodens 19 angeordneten zylindrischen Behälterteil 23 mit Kegelboden 24 eine Festbettströmung ausgebildet wird, so daß eine zufriedenstellende Reduktion auch der großen Teilchen erreicht werden kann.

Durch die kegelstumpfförmige Gestalt des Gasverteilungsbodens 19 ändert sich die Leerrohrgeschwindigkeit mit der Höhe. Als Folge stellt sich über die Höhe des Gasverteilungsbodens 19 eine eigene Korngrößenverteilung ein. Durch entsprechende Anordnung der Düsen im Gasverteilungsboden 19 kann somit eine intern zirkulierende Wirbelschicht ausgebildet werden, in der in der Mitte die Gasgeschwindigkeit höher ist als am Rand. Eine Wirbelschichtausbildung dieser Art kann sowohl für den Reduktionsreaktor 8 als auch für den Vorwärmreaktor 1 Verwendung finden.

Ein Teil des aus dem Einschmelzvergaser 10 austretenden Reduktionsgases wird in einem Heißzyklon 25 einer Reinigung, in einem nachgeordneten Wäscher 26 einer Kühlung unterzogen und über einen Verdichter 27 wiederum in das aus dem Einschmelzvergaser 10 austretende Reduktionsgas über die Gasleitung 28 zugemischt. Der im Heißzyklon 25 abgeschiedene Staub wird über einen N₂-Injektor 29 in den Einschmelzvergaser 10 rückgeleitet. Ein Teil des aus dem Heißzyklon 25 austretenden, noch ungekühlten Reduktionsgases gelangt über die Gasaufgabe 22, die von einer Ringleitung gebildet ist, in den Wirbelschicht-Reduktionsreaktor 8 über dessen zylindrischen Behälterteil 23.

Das aus dem Wirbelschicht-Reduktionsreaktor 8 abgezogene Gas wird über eine Gasleitung 30 einem Reduktionszyklon 31 zugeführt, in dem im Reduktionsgas noch enthaltene Feinteile abgeschieden und fertig reduziert werden. Diese Feinteile werden über eine Förderleitung 32 und einen N₂-Injektor 33 dem Einschmelzvergaser 10 etwa in der Höhe des oberen Endes des Festbettes I eingebracht.

Das aus dem Reduktionszyklon 8 austretende, teilweise oxidierte Reduktionsgas gelangt über die Gasleitung 30 in den Wirbelschicht-Vorwärmreaktor 1, wobei jedoch zur Aufheizung des Reduktionsgases ein Teil desselben verbrannt wird, u.zw. in einer Brennkammer 34, in die eine ein sauerstoffhältiges Gas zubringende Leitung 35 mündet.

Aus dem Wirbelschicht-Reduktionsreaktor 8 wird ein Teil der fertigreduzierten Einsatzstoffe in Höhe des Wirbelbettes 18 mit einer Austragsschnecke 36 abgezogen und mittels der Förderleitung 37 über einen N₂-Injektor 33 in den Einschmelzvergaser 10 etwa in Höhe des oberen Endes des Festbettes I eingebracht, vorzugsweise gemeinsam mit den aus dem Reduktionszyklon 31 stammenden Feinteilen.

Das im Zyklon 4 der Exportgas-Gasableitung 6 abgeschiedene feinteilige Gut wird über eine Förderleitung 38 mit Schleusen 39 - die auch in den anderen Förderleitungen 32, 37 für das teiloder fertigreduzierte Gut vorgesehen sind - über die das Reduktionsgas in den Wirbelschicht-Reduktionsreaktor 8 zuführende Ringleitung 20 eingebracht.

Die Funktion der Anlage nach Fig. 1 ist im einzelnen wie folgt:

Das aufbereitete Feinerz - abgesiebt und getrocknet - mit einer beispielsweisen Kornverteilung von
- 0,044 mm = ca. 20 %
0,044 - 6,3 mm = ca. 70 %
6,3 - 12,7 mm = ca. 10 %
und einer Feuchte von ca. 2 % wird pneumatisch oder mit Hilfe eines Steil- oder Senkrechtförderers in den Vorwärmreaktor 1 chargiert. Dort wird es in der Wirbelbettzone 2 auf eine Temperatur von ca. 850°C vorgewärmt und infolge der reduzierenden Atmosphäre gegebenenfalls vorreduziert, etwa bis zur Wüstitstufe.

Für diesen Vorreduktionsvorgang soll das Reduktionsgas mindestens 25 % CO + H₂ beinhalten, um genügend Reduktionskraft zu besitzen.

In weiterer Folge fließt das vorgewärmte und gegebenenfalls vorreduzierte Feinerz - vorzugsweise schwerkraftbedingt - in den Reaktionsreaktor 8, in dessen Wirbelschicht bzw. Wirbelbett 18 das Feinerz bei einer Temperatur von ca. 850°C bis zur Fe-Stufe weitgehend reduziert. Für diesen Reduktionsvorgang soll das Gas einen Gehalt an CO + H₂ von mindestens 68 % aufweisen.

Im Reduktionsreaktor 8 findet eine Sichtung des Feinerzes statt, wobei der Anteil unter 0,2 mm mittels des Reduktionsgases in den Reduktionszyklon 31 mitgeschleppt wird. Dort findet während des Abscheidens der Feststoffe durch die Zyklonwirkung die Fertigreduktion des unter 0,2 mm-Feinerzes statt.

Der feinere Feststoffanteil, der aus der Wirbelschicht 18 des Reduktionsreaktors 8 mit Hilfe der Austragsschnecke 36 ausgetragen wird, wird über die Schleusen 39 gemeinsam mit dem im Reduktionszyklon 31 abgeschiedenen Feinerz mit Hilfe des N₂-Injektors 33 dem Einschmelzvergaser 10 im Bereich der Einblasebenen des sauerstoffhältigen Gases zugeführt.

Der gröbere Feststoffanteil aus dem unteren Bereich des Reduktionsreaktors 8 wird über die Schleusen 39 und mit Hilfe des N₂-Injektors 9 oder mittels eines Schwerkraftaustrages in den Einschmelzvergaser 10 im Bereich des Feinkoksfließbettes III eingeblasen bzw. chargiert.

Der im Heißzyklon 25 abgeschiedene Staub (vorwiegend Fe- und C-hältig) wird über Schleusen 39 mit Hilfe des N₂-Injektors 29 und mittels eines Sauerstoff-Staubbrenners dem Einschmelzvergaser 10 im Bereich zwischen dem Feinkoksfließbett III und dem Grobkoksfließbett II zugeführt.

Die für den Prozeß benötigten Zuschläge werden grobkörnig, vorzugsweise in einer Korngröße von 4 bis 12,7 mm, über den Kohlenweg (11) und feinkörnig, vorzugsweise in einer Korngröße von 2 bis 6,3 mm, über den Feinerzweg (3) zwecks Vorwärmung und Calcinierung chargiert.

Für Feinerze mit längerer Reduktionsdauer ist, wie in Fig. 2 dargestellt, ein zweiter (sowie, wenn erforderlich, ein dritter) Wirbelschicht-Reduktionsreaktor 8' mit zusätzlichem Reduktionszyklon 31' in Serie bzw. in Reihe zum ersten Reduktionsreaktor 8 vorgesehen. Beim zweiten Reduktionsreaktor 8' wird das Feinerz bis zur Wüstitstufe und beim ersten Reduktionsreaktor 8 bis zur Fe-Stufe reduziert.

In diesem Fall wird der Feststoffanteil, der aus der Wirbelschicht 18' des zweiten Reduktionsreaktors mit Hilfe der Austragsschnecke 36' ausgetragen wird, gemeinsam mit dem gröberen Feststoffanteil aus dem unteren Bereich des zweiten Reduktionsreaktors 8' schwerkraftbedingt in den ersten Reduktionsreaktor 8 chargiert. Das im zweiten Reduktionszyklon 31' abgeschiedene Feinerz wird gemeinsam mit dem im ersten Reduktionszyklon 31 abgeschiedenen Feinerz mit Hilfe des N₂-Injektors 33 dem Einschmelzvergaser 10 im Bereich der Einblasebenen des sauerstoffhältigen Gases zugeführt.

Wenn im Falle der Verwendung von zwei Wirbelschicht-Reduktionsreaktoren 8, 8' und zwei Reduktionszyklonen 31, 31' der Betriebsdruck nicht ausreicht, um die Druckverluste im System auszugleichen, wird erfindungsgemäß das für den Vorwärmreaktor 1 benötigte Gasgemisch auf den erforderlichen Druck mit Hilfe des Verdichters 40 gebracht. In diesem Fall wird das Gas aus dem zweiten Reduktionszyklon 31' in einem Wäscher 41 gereinigt. In der weiteren Folge wird jedoch nur ein Teilstrom des Gases verdichtet - ein Teil wird als Exportgas über die Leitung 42 abgezogen - und in einer Mischkammer 43 mit einem über eine Leitung 44 zugeführten sauerstoffhältigen Gas entsprechend vermischt, so daß anschließend im Vorwärmreaktor 1 eine Teilverbrennung des Reduktionsgases zwecks Erreichen der benötigten Feinerz-Vorwärmungstemperatur stattfinden kann.

Das hochwertige Exportgas aus der Roheisenherstellung kann wie oben angeführt zur Strom- mit oder ohne Sauerstoff-Erzeugung verwendet werden. Nach einer erfindungsgemäßen Ausführungsform, die in Fig. 3 veranschaulicht ist, wird das Exportgas nach einer CO₂-Reinigung 45 und Aufwärmung 46 auf ca. 850°C wie nachfolgend beschrieben wieder als Reduktionsgas eingesetzt:

Zur Erzeugung von heißbrikettiertem Eisen wird erfindungsgemäß das Feinerz gleicher Spezifikation wie für die Roheisenherstellung mit dem Reduktionsgas in den gleichen Aggregaten wie bei der Roheisenherstellung vorgewärmt und reduziert. Die fertig reduzierten Kornfraktionen aus dem mindestens einen Reduktionsreaktor 8 und aus dem Reduktionszyklon 31 werden mit Hilfe von N₂-Injektoren 33 in einen Beschickungsbunker 47 eingeblasen. Alternativ kann die gröbere Kornfraktion aus dem unteren Bereich des Reduktionsreaktors 8 mittels eines Schwerkraftaustrages in den Beschickungsbunker 47 chargiert werden.

Anschließend gelangt das fertig reduzierte Feinerz mit ca. 92 % Metallisierungsgrad und einer Temperatur von mindestens 750°C schwerkraftbedingt über eine Vorverdichterschnecke 48 mit regelbarem Motor in eine Walzen-Brikettierpresse 49.

In den nachfolgenden Beispielen sind typische Kenndaten der erfindungsgemäßen Verfahren zusammengestellt, die beim Betrieb der erfindungsgemäßen Anlagen gemäß den in den Fig. 1 bis 3 dargestellten Ausführungsformen erreicht werden.

### Beispiel:

| Kohleanalyse (trockene Analysenwerte) | |
|---|---|
| C | 77 % |
| H | 4,5 % |
| N | 1,8 % |
| O | 7,6 % |
| S | 0,5 % |
| Asche | 9,1 % |
| C_{fix} | 61,5 % |

| Erzanalyse (feuchte Analysenwerte) | |
|---|---|
| Fe | 62,84 % |
| Fe₂O₃ | 87,7 % |
| CaO | 0,73 % |
| MgO | 0,44 % |
| SiO₂ | 6,53 % |
| Al₂O₃ | 0,49 % |
| MnO | 0,15 % |
| Glühverluste | 0,08 % |
| Feuchte | 2 % |

| Korngrößenverteilung des Feinerzes | |
|---|---|
| + 10 mm | 0 % |
| 10 - 6 mm | 5,8 % |
| 6 - 2 mm | 44,0 % |
| 2 - 0,63 mm | 29,6 % |
| 0,63 - 0,125 mm | 13,0 % |
| - 0,125 mm | 7,6 % |

| Zuschläge (trockene Analysenwerte) | |
|---|---|
| CaO | 45,2 % |
| MgO | 9,3 % |
| SiO₂ | 1,2 % |
| Al₂O₃ | 0,7 % |
| MnO | 0,6 % |
| Fe₂O₃ | 2,3 % |
| Glühverluste | 39,1 % |

Für die Erzeugung von 42 t Roheisen/h in der Anlage gemäß Fig. 1 werden 42 t Kohle/h mit 29.000 Nm³ O₂/h vergast. Der Erzverbrauch beträgt dafür 64 t/h und der Verbrauch an Zuschlägen 14 t/h.

Das erzeugte Roheisen hat neben Eisen folgende Zusammensetzung:

| | |
|---|---|
| C | 4,2 % |
| Si | 0,4 % |
| P | 0,07 % |
| Mn | 0,22 % |
| S | 0,04 % |

Das Exportgas aus der Roheisenanlage fällt mit 87.000 Nm³/h an und weist folgende Analyse auf:

| | |
|---|---|
| CO | 36,1 % |
| CO₂ | 26,9 % |
| H₂ | 16,4 % |
| H₂O | 1,5 % |
| N₂ + Ar | 18,1 % |
| CH₄ | 1 % |
| H₂S | 0,02 % |
| Heizwert | 6780 kJ/Nm³ |

Bei der weiteren erfindungsgemäßen Nutzung des Exportgases aus der Roheisenanlage zur Produktion von heißbrikettiertem Eisen gemäß Fig. 3 können 29 t heißbrikettiertes Eisen/h erzeugt werden. Die dazu notwendige Recyclegasmenge beträgt 36.000 Nm³/h. Der heißbrikettierte Eisenschwamm weist folgende Analysenwerte auf:

| | |
|---|---|
| Metallisierung | 92 % |
| C | 1 % |
| S | 0,01 % |
| P | 0,03 % |

Die Exportgasmenge aus der Anlage zur Erzeugung von heißbrikettiertem Eisen beträgt 79.000 Nm³/h, und das Gas hat die Zusammensetzung:

| | |
|---|---|
| CO | 21,6 % |
| CO₂ | 44,1 % |
| H₂ | 10,6 % |
| H₂O | 2,8 % |
| N₂ + Ar | 19,9 % |
| CH₄ | 1 % |
| Heizwert | 4200 kJ/Nm³ |

Der elektrische Leistungsbedarf der Roheisenanlage und Anlage zur Erzeugung von heißbrikettiertem Eisen beträgt 23 MW. Das Exportgas nach der Anlage zur Erzeugung von heißbrikettiertem Eisen entspricht einer thermischen Leistung von 145 MW.

## Patentansprüche

1. Verfahren zur Herstellung von flüssigem Roheisen oder flüssigen Stahlvorprodukten aus von Eisenerzen und Zuschlägen gebildeten, zumindest teilweise einen Feinanteil aufweisenden Einsatzstoffen, wobei die Einsatzstoffe in einer Vorwärmzone (2) einer Vorwärmung im Wirbelschichtverfahren unterzogen werden, in mindestens einer Reduktionszone (18, 18') im Wirbelschichtverfahren zu Eisenschwamm direkt und weitgehend fertig reduziert werden, der Eisenschwamm in eine Einschmelzvergasungszone (I bis IV) chargiert, unter Zufuhr von Kohlenstoffträgern und sauerstoffhältigem Gas erschmolzen und ein CO- und H₂-hältiges Reduktionsgas erzeugt wird, welches in die Reduktionszone (18, 18') eingeleitet, dort umgesetzt, als Exportgas abgezogen und einem Verbraucher zugeführt wird, **dadurch gekennzeichnet, daß** das aus der Vorwärmzone (2) austretende Exportgas gegebenenfalls nach Zumischung eines Teiles des aus der Reduktionszone (18) austretenden Reduktionsgases nach einer CO₂-Reinigung zur Erzeugung von heiß brikettiertem Eisen herangezogen wird, wobei Feinerz in einer Vorwärmzone (2) einer Vorwärmung unterzogen, anschließend in mindestens einer Reduktionszone (18) einer weitgehenden Fertigreduktion unterzogen und weiters einer Verdichter- und Brikettiereinrichtung (48, 49) zugeführt wird, und das Exportgas nach einer Aufheizung in die mindestens eine Reduktionszone unter Bildung eines Wirbelbettes (18) geleitet sowie von dieser nach Durchströmen desselben abgezogen und der Vorwärmzone (2) unter Teilverbrennung zwecks Temperaturerhöhung zur Bildung eines Wirbelbettes zugeführt wird.

2. Anlage zur Durchführung des Verfahrens nach Anspruch 1, mit mindestens einem Wirbelschicht-Reduktionsreaktor (8, 8'), in den eine Förderleitung (7) für Eisenerz und Zuschläge enthaltende Einsatzstoffe, eine Gasleitung (17) für ein Reduktionsgas sowie eine Förderleitung (9) für das in ihm gebildete Reduktionsprodukt und eine Gasleitung (30) für das Topgas münden, und mit einem Einschmelzvergaser (10), in den die das Reduktionsprodukt aus dem Reduktionsreaktor (8, 8') führende Förderleitung (9) mündet und der Zuleitungen (11, 12) für sauerstoffhältige Gase und Kohlenstoffträger sowie Abstiche (15, 16) für Roheisen (13) bzw. Stahlvormaterial und Schlacke (14) aufweist, wobei die in den Reduktionsreaktor (8, 8') mündende Gasleitung für im Einschmelzvergaser (10) gebildetes Reduktionsgas vom Einschmelzvergaser (10) ausgeht und dem Wirbelschicht-Reduktionsreaktor (8, 8') ein Wirbelschicht-Vorwärmreaktor (1) in Fließrichtung der Einsatzstoffe vorgeordnet ist, in den die Gasleitung (30) des Reduktionsreaktors (8, 8') einmündet, und wobei verbrauchtes bzw. teilverbrauchtes Reduktionsgas als Exportgas über eine Gasableitung (6, 42) einem Verbraucher zuleitbar ist, **dadurch gekennzeichnet, daß** die Gasleitung (6, 42) für das Exportgas zur Erzeugung von heißbrikettiertem Eisen nach Zwischenschaltung eines CO₂-Wäschers (45) und einer Aufheizeinrichtung (46) in mindestens einen weiteren Reduktionsreaktor (8) mündet, von dem eine Gasleitung in einen Wirbelschicht-Vorwärmreaktor (1) geführt ist, wobei in den Wirbelschicht-Vorwärmreaktor (1) eine Feinerz-Chargierleitung (3) mündet und von dem Wirbelschicht-Vorwärmreaktor (1) eine das vorgewärmte Feinerz zum Reduktionsreaktor führende Förderleitung ausgeht, und daß dem Reduktionsreaktor (8) in Richtung des Feinerzflusses eine Verdichter- und Brikettiereinrichtung (48, 49) nachgeordnet ist.

3. Anlage nach Anspruch 2, **dadurch gekennzeichnet, daß** der Wirbelschicht-Reduktionsreaktor (8) einen unteren Teil (23) mit geringerem Durchmesser und einen oberen, an den unteren Teil anschließenden Teil mit größerem Durchmesser aufweist, wobei der Übergang vom unteren in den oberen Teil konisch ausgebildet ist und in das konische Übergangsstück (19) die Gasleitung für das Reduktionsgas einmündet.

4. Anlage nach Anspruch 2 oder 3, **dadurch gekennzeichnet, daß** der Wirbelschicht-Reduktionsreaktor (8) in Höhe der Wirbelschicht (18) mit einer Feinteilaustragseinrichtung (36) versehen ist, von der eine Förderleitung (37) zu einer Pneumatik-Fördereinrichtung (33) führt, die zur Brikettiereinrichtung (49) führt.

## Claims

1. A method for producing liquid pig iron or liquid steel pre-products from charging substances formed from iron ores and fluxes and having, at least partially, a content of fines, wherein the charging substances are subjected to preheating according to the fluidized-bed method in a preheating zone (2), are directly and to a large extent completely reduced to sponge iron in at least one reduction zone (18, 18') according to the fluidized-bed method, the sponge iron is charged into a melt-down gasification zone (I to IV), is melted under supply of carbon carriers and an oxygen-containing gas, and a CO- and H₂-containing reducing gas is generated, which is supplied to the reduction zone (18, 18'), is reacted there, is withdrawn as an export gas and is supplied to a consumer, **characterized in that**, after CO₂-purification, the export gas emerging from the preheating zone (2) is utilized for the generation of hot-briquetted iron, optionally after admixing a portion of the reducing gas emerging from the reduction zone (18), wherein fine ore is subjected to preheating in a preheating zone (2), subsequently is subjected to largely a complete reduction in at least one reduction zone (18) and furthermore is supplied to a compressing and briquetting means (48, 49) and, after heating, the export gas is conducted into the at least one reduction zone, under the formation of a fluidized bed (18), and is withdrawn from the same after having passed through the latter and is supplied to the preheating zone (2), under partial combustion, in order to increase the temperature for the formation of a fluidized bed.

2. A plant for carrying out the process according to claim 1, comprising at least one fluidized-bed reduction reactor (8, 8'), into which a conveyor duct (7) for charging substances containing iron ore and fluxes, a gas duct (17) for a reducing gas as well as a conveyor duct (9) for the reduction product formed therein and a gas duct (30) for the topgas run, and a melter gasifier (10), into which the conveyor duct (9) carrying the reduction product from the reduction reactor (8, 8') runs and which exhibits feed ducts (11, 12) for oxygen-containing gases and carbon carriers as well as taps (15, 16) for pig iron (13) or a steel prematerial and slag (14), respectively, wherein the gas duct for reducing gas formed in the melter gasifier (10), which gas duct runs into the reduction reactor (8, 8'), originates from the melter gasifier (10), and a fluidized-bed preheating reactor (1) is arranged to precede the fluidized-bed reduction reactor (8, 8') in the flow direction of the charging substances, into which fluidized-bed preheating reactor the gas duct (30) of the reduction reactor (8, 8') runs, and wherein consumed or partially consumed reducing gas may be supplied as an export gas to a consumer via a gas-discharge duct (6, 42), **characterized in that** the gas duct (6, 42) for the export gas, after the interposition of a CO₂-scrubber (45) and a heating means (46), runs into at least one further reduction reactor (8) in order to produce hot-briquetted iron, wherefrom a gas duct is conducted to a fluidized-bed preheating reactor (1), with an ore-dust charging duct (3) running into the fluidized-bed preheating reactor (1) and a conveyor duct carrying the preheated ore dust to the reduction reactor originating from the fluidized-bed preheating reactor (1), and that a compressing and briquetting means (48, 49) is arranged to follow the reduction reactor (8) in the flow direction of the ore dust.

3. A plant according to claim 2, **characterized in that** the fluidized-bed reduction reactor (8) comprises a lower part (23) having a smaller diameter and an upper part adjacent to the lower part and having a larger diameter, whereby the passage from the lower part to the upper part is configured so as to be tapered and the gas duct for the reducing gas runs into the tapered transition piece (19).

4. A plant according to claim 2 or 3, **characterized in that**, at the level of the fluidized bed (18), the fluidized-bed reduction reactor (8) is provided with a discharge means for fines (36), wherefrom a conveyor duct (37) leads to a pneumatic conveyor means (33) leading to the briquetting means (49).

## Revendications

1. Procédé de production de fonte brute liquide ou de précurseurs d'acier liquides à partir de matières premières constituées par des minerais de fer et des fondants, comportant au moins en partie une portion fine, où les matières premières sont soumises dans une zone de préchauffage (2) à un préchauffage dans le procédé à lit fluidisé, sont réduites directement et sensiblement totalement en éponge de fer dans au moins une zone de réduction (18, 18') dans le procédé à lit fluidisé, l'éponge de fer est chargée dans une zone de gazéification par fusion (I à IV), est fondue avec apport de porteurs de carbone et de gaz contenant de l'oxygène et un gaz de réduction contenant CO et H₂ est produit, qui est introduit dans la zone de réduction (18, 18') où il est converti, retiré sous forme de gaz d'export et envoyé à un consommateur, **caractérisé en ce que** le gaz d'export quittant la zone de préchauffage (2) éventuellement après mélange d'une partie du gaz de réduction quittant la zone de réduction (18) est utilisé après une épuration de CO₂ pour produire du fer aggloméré à chaud, où un minerai fin est soumis à un préchauffage dans une zone de préchauffage (2), puis est soumis à une réduction sensiblement totale dans au moins une zone de réduction (18) et est envoyé en outre à un dispositif de densification et d'agglomération (48, 49), et le gaz d'export après un chauffage est envoyé dans la ou les zones de réduction avec formation d'un lit fluidisé (18) et est retiré de celle-ci après avoir traversé le lit fluidisé et est envoyé à la zone de préchauffage (2) avec combustion partielle afin d'augmenter la température pour la formation d'un lit fluidisé.

2. Installation pour la mise en oeuvre du procédé selon la revendication 1 comportant au moins un réacteur de réduction à lit fluidisé (8, 8'), dans lequel débouchent une conduite de transport (7) pour des matières premières contenant du minerai de fer et des fondants, une conduite de gaz (17) pour un gaz de réduction ainsi qu'une conduite de transport (9) pour le produit de réduction formé dans celui-ci et une conduite de gaz (30) pour le gaz de tête, et comportant un gazéificateur à fusion (10) dans lequel débouche la conduite de transport (9) transportant le produit de réduction depuis le réacteur de réduction (8, 8') et qui comporte des conduites d'amenée (11, 12) pour des gaz contenant de l'oxygène et des porteurs de carbone ainsi que des piquages (15, 16) pour de la fonte brute (13) ou un précurseur d'acier et des scories (14), où la conduite de gaz pour le gaz de réduction formé dans le gazéificateur à fusion (10) qui débouche dans le réacteur de réduction (8, 8') provient du gazéificateur à fusion (10) et le réacteur de réduction à lit fluidisé (8, 8') est précédé par un réacteur de préchauffage à lit fluidisé (1) dans le sens d'écoulement des matières premières, dans lequel débouche la conduite de gaz (30) du réacteur de réduction (8, 8'), et où le gaz de réduction consommé ou partiellement consommé peut être envoyé à titre de gaz d'export à un consommateur par le biais d'une conduite d'évacuation de gaz (6, 42), **caractérisée en ce que** la conduite de gaz (6, 42) pour le gaz d'export pour la production de fer aggloméré à chaud, après insertion d'un laveur de CO₂ (45) et d'un dispositif de chauffage (46), débouche dans au moins un autre réacteur de réduction (8) duquel une conduite de gaz mène à un réacteur de préchauffage à lit fluidisé (1), où une conduite de chargement de minerai fin (3) débouche dans le réacteur de préchauffage à lit fluidisé (1), et une conduite de transport transportant le minerai fin préchauffé au réacteur de réduction part du réacteur de préchauffage à lit fluidisé (1), et **en ce qu'**un dispositif de densification et d'agglomération (48, 49) est disposé en aval du réacteur de réduction (8) dans le sens du courant de minerai fin.

3. Installation selon la revendication 2 **caractérisée en ce que** le réacteur de réduction à lit fluidisé (8) comporte une partie inférieure (23) de plus faible diamètre et une partie supérieure de plus grand diamètre qui fait suite à la partie inférieure, où la transition de la partie inférieure à la partie supérieure est de forme conique et la conduite de gaz pour le gaz de réduction débouche dans le tronçon de transition conique (19).

4. Installation selon la revendication 2 ou 3 **caractérisée en ce que** le réacteur de réduction à lit fluidisé (8) est muni au niveau du lit fluidisé (18) d'un dispositif d'évacuation des parties fines (36) duquel une conduite de transport (37) mène à un dispositif de transport pneumatique (33) qui aboutit au dispositif d'agglomération (49).
